# EUROPEAN PATENT SPECIFICATION

(11) **EP 0 619 244 B1**
(45) Date of publication and mention of the grant of the patent: **22.11.1995**
(21) Application number: 93105077.7
(22) Date of filing: 27.03.1993
(51) Int. Cl.: B65D 77/04, B65D 81/20

(54) **Food package**
Lebensmittelverpackung
Emballage pour produits alimentaires

(43) Date of publication of application: 12.10.1994
(73) Proprietor: FRISCO-FINDUS AG, CH-9400 Rorschach (CH)
(72) Inventor: Sjoberg, Agneta Elisabeth, S-227 38 Lund (SE)
(74) Representative: Pate, Frederick George

(56) References cited:
- EP-A- 0 268 427
- EP-A- 0 368 601
- EP-A- 0 391 712
- FR-A- 1 327 914

## Description

The present invention relates to a package, and more particularly to a package for a sterilised food product.

At the present time, packages for sterilised food products, e.g.for ready-to-prepare meals stored at ambient temperature, consist of a PP/EVOH/PP laminated tray having a PET/AL/PP laminated lidding foil packed in an outer cardboard box or a sleeve. Such packages are environmentally unsatisfactory because the many different laminates consist of materials that are bonded together and are difficult or impossible to recycle. For example, the alufoil from the lid remaining on the sealing surface of the tray after opening increases the difficulty of recycling as well as causing problems with microwave heating in the preparation for consumption. Such packages are also relatively expensive.

We have devised a package which is cheaper, uses less packaging material and is easier to recycle which involves the use of monomaterial plastics for either the tray or the lid or for both, the lidded tray being flow wrapped with a laminated aluminium film.

The prior art describes packages having a tray and a lid being wrapped together. A package having separate tray and lid placed together in a flow wrapped film is known from EP-A-0391 712. Another wrapped package disclosed in FR-A-0894 330, which document forms the basis for the two part of claim 1, comprises a tray with a lid having a window, the tray and lid being wrapped in a plastics pouch. None of these documents discloses a package like the one according to the invention or are solving the problems discussed above.

The present invention provides a package comprising a plastics tray and a plastics lid the plastics lid being sealed to the plastics tray characterised in that the plastics tray and the plastics lid are flow wrapped with or bagged in a laminated aluminium film pouch and that either or both of the plastics tray and the plastics lid are made of monomaterial plastics.

By "monomaterial plastics" in this invention we mean a material made of a single layer of a polymeric plastics material and not a laminate so that there is no bonding together of the layers as there is when a plurality of plastics materials are used to form a laminated structure. The thickness of the tray may be, for instance, from 600 to 900 microns and the thickness of the lid may be, for instance, from 30 to 60 microns.

The plastics material that is used for the tray and the lid of the package may be any polymeric plastics material which can withstand retorting. Examples are crystallised polyethylene terephthalate(PET), high density polyethylene(PEHD) and polypropylene(PP). Similar plastics materials may also be used for the laminated aluminium film pouch. Advantageously, the laminated aluminium film pouch has a thin layer of aluminium foil bonded between layers of plastics material.

The thickness of the laminated aluminium film pouch may be, for instance, from 50 to 150 microns. The aluminium layer may have a thickness of from 9 to 30 microns thickness and preferably from 10 to 20 microns.

The plastics lid is sealed to the flange of the tray and the lidded tray is flow wrapped or bagged with the laminated aluminium film pouch in a modified atmosphere, e.g. carbon dioxide, nitrogen or another suitable inert gas or in a vacuum.

The package of the present invention provides several advantages over the currently used packages for sterilised food products same examples of which are as follows:
a) the sealing of the lid to the tray is easier with monomaterial plastics then with an aluminium containing laminate because heat transport through the lid is easier when no aluminium is present, resulting in a faster sealing process,
b) it may be possible to use a higher line speed,
c) as the flow wrapping or bagging operation takes place directly after sealing the lid to the tray, the packing can be carried out in one step before sterilisation,
d) the currently used packaging systems are very sensitive to microleakages through the flange seal so that not only is contamination on the tray flanges a considerable problem but also it is very difficult to develop an easy opening system. In the package of the present invention, the outer wrap containing aluminium acts as an extra security both from an oxygen as well as from a microbiological point of view and, therefore, the risks involved in the use of an easy opening system on the tray are very much lower,
e) an improved shelf life may be obtained,
f) the monomaterial plastics is easier to recycle and less material is used: this is advantageous from an environmental point of view,
g) it is easy to print the laminated aluminium film pouch,
h) the line efficiency may be increased because sterilisationin the outer pack requires much less handling,
i) the package may be more convenient to open for the consumer because the sealing of the lid can more easily be made easy-peel.
j) the tray is always clean as it is sterilised in the pouch and no rust and dirt from the retort will contaminate the outside of the tray, and
k) if a non-peelable lid is used, there is no problem with aluminium foil remaining on the sealing surface of the tray after opening.

The package of the present invention may be used, for example, for ready-to-prepare meals which may be stored at ambient temperature. Examples of meals are those containing meat, rice or potatoes, and vegetables. The plastics tray may have one or a plurality of compartments.

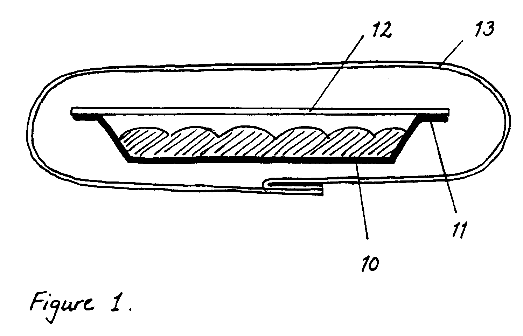

The present invention will now be further described by way of example only with reference to the accompanying drawing in which Figure 1 represents a side sectional view of a package.

Referring to the drawing, the package comprises a polypropylene tray 10 (thickness 750 microns) having a flange 11 containing meat, potatoes and green peas to which is sealed a polypropylene film lid 12 (thickness 45 microns) and flow wrapped with a pouch 13. The pouch 13 consists of an aluminium film 15 microns thick to the inside surface of which is bonded a layer of polypropylene film 75 microns thick and to the outside surface of which is bonded a layer of polyethylene terephthalate 12 microns thick.

For packaging a ready-to-prepare meal, the processed food ingredients are placed in the tray 10, the lid 12 is sealed to the flange 11 by conventional methods and the lidded tray is flow wrapped with the pouch 13 in an atmosphere of carbon dioxide. The process can be carried out very rapidly on a production line.

## Claims

1. A package comprising a plastics tray (10) and a plastics lid (12), the plastics lid (12) being sealed to the plastics tray (10), characterised in that the plastics tray and the plastics lid are flow wrapped with or bagged in a laminated aluminium film pouch (13) and that either or both of the plastics tray (10) and the plastics lid (12) are made of monomaterial plastics.

2. A package according to claim 1 wherein the plastics material that is used for the tray (10) and the lid (12) of the package is polypropylene or crystallised polyethylene terephthalate.

3. A package according to claim 1 wherein the thickness of the plastics tray (10) is from 650 to 850 microns and the thickness of the plastics lid (12) is from 30 to 60 microns.

4. A package according to claim 1 wherein the thickness of the laminated aluminium film pouch (13) is from 50 to 150 microns.

5. A package according to claim 1 wherein the thickness of the aluminium layer is from 9 to 30 microns.

6. A package according to claim 1 wherein the lidded tray is flow wrapped with the laminated aluminium film pouch (13) in a modified atmosphere or in a vacuum.

7. A package according to claim 6 wherein the modified atmosphere is carbon dioxide, nitrogen or a mixture of carbon dioxide and nitrogen.

8. A package according to claim 1 wherein the plastics tray (10) may have one or a plurality of compartments.

## Patentansprüche

1. Verpackung mit einer Kunststoffschale (10) und einem Kunststoffdeckel (12), wobei der Kunststoffdeckel (12) mit der Kunststoffschale (10) verschweißt ist,
dadurch gekennzeichnet,
daß die Kunststoffschale (10) und der Kunststoffdeckel (12) in einem Beutel (13) aus laminierter Aluminiumfolie fließverpackt bzw. eingehüllt sind und daß die Kunststoffschale (10) oder der Kunststoffdeckel (12) oder beide aus einem sortenreinen Kunststoff hergestellt sind.

2. Verpackung nach Anspruch 1, bei der als Kunstoffmaterial für die Schale (10) und den Deckel (12) der Verpackung Polypropylen oder kristallisiertes Polyethylen-Terephthalat verwendet wird.

3. Verpackung nach Anspruch 1, bei der die Dicke der Kunststoffschale (10) 650 bis 850 µm und die Dicke des Kunststoffdeckels (12) 30 bis 60 µm beträgt.

4. Verpackung nach Anspruch 1, bei der die Dicke des Beutels (13) aus laminierter Aluminiumfolie 50 bis 150 µm beträgt.

5. Verpackung nach Anspruch 1, bei der die Dicke der Aluminiumschicht 9 bis 30 µm beträgt.

6. Verpackung nach Anspruch 1, bei der die mit Deckel versehene Schale in den Beutel (13) aus laminierter Aluminiumfolie in einer modifizierten Atmosphäre oder in einem Vakuum fließverpackt wird.

7. Verpackung nach Anspruch 6, bei der als modifizierte Atmosphäre Kohlendioxid, Stickstoff oder eine Mischung aus Kohlendioxid und Stickstoff verwendet wird.

8. Verpackung nach Anspruch 1, bei der die Kunststoffschale (10) ein oder mehrere Fächer aufweisen kann.

## Revendications

1. Emballage comportant une barquette (10) en matière plastique et un couvercle (12) en matière plastique, le couvercle (12) en matière plastique étant scellé à la barquette (10) en matière plastique, caractérisé en ce que la barquette en matière plastique et le couvercle en matière plastique sont enveloppés de façon dynamique ou ensachée dans un sachet (13) en film d'aluminium stratifié et l'un ou l'autre de la barquette (10) en matière plastique et du couvercle (12) en matière plastique, ou les deux, sont réalisés en une matière plastique unique.

2. Emballage selon la revendication 1, dans lequel la matière plastique utilisée pour la barquette (10) et le couvercle (12) de l'emballage est un polypropylène ou un téréphtalate de polyéthylène cristallisé.

3. Emballage selon la revendication 1, dans lequel l'épaisseur de la barquette (10) en matière plastique est de 650 à 850 micromètres et l'épaisseur du couvercle (12) en matière plastique est de 30 à 60 micromètres.

4. Emballage selon la revendication 1, dans lequel l'épaisseur du sachet (13) en film d'aluminium stratifié est de 50 à 150 micromètres.

5. Emballage selon la revendication 1, dans lequel l'épaisseur de la couche d'aluminium est de 9 à 30 micromètres.

6. Emballage selon la revendication 1, dans lequel la barquette munie de son couvercle est enveloppée de façon dynamique avec le sachet (13) en film d'aluminium stratifié dans une atmosphère modifiée ou sous vide.

7. Emballage selon la revendication 6, dans lequel l'atmosphère modifiée est de l'anhydride carbonique, de l'azote ou un mélange d'anhydride carbonique et d'azote.

8. Emballage selon la revendication 1, dans lequel la barquette (10) en matière plastique peut comporter un ou plusieurs compartiments.
